# EUROPEAN PATENT SPECIFICATION

(11) **EP 4 004 421 B1**
(45) Date of publication and mention of the grant of the patent: **22.05.2024**
(21) Application number: 20725304.8
(22) Date of filing: 20.04.2020
(51) Int. Cl.: F15D 1/00, F16L 55/027, F15D 1/02, G01F 1/66

(54) **IN-LINE ULTRASONIC ATTENUATION END TREATMENT FOR USE WITH AN ULTRASONIC GAS FLOW METER**
IN-LINE-ULTRASCHALLDÄMPFUNGSENDBEHANDLUNG ZUR VERWENDUNG MIT EINEM ULTRASCHALL-GASDURCHFLUSSMESSER
TRAITEMENT D'EXTRÉMITÉ D'ATTÉNUATION ULTRASONORE EN LIGNE DESTINÉ À ÊTRE UTILISÉ AVEC UN DÉBITMÈTRE DE GAZ À ULTRASONS

(30) Priority: 29.07.2019 US 201916525064; 19.08.2019 US 201916544243
(43) Date of publication of application: 01.06.2022
(73) Proprietor: Big Elk Energy Systems, LLC, Tulsa, OK 74107 (US)
(72) Inventor: MCCLINTOCK, Dennis, Tulsa, OK 74107 (US)
(74) Representative: Bewley, Ewan Stuart
(86) International application number: PCT/US2020/028984
(87) International publication number: WO 2021/021258

(56) References cited:
- WO-A1-99/22207
- CN-B- 105 465 537
- JP-A- 2012 220 428
- JP-A- 2016 098 857

## Description

### BACKGROUND

This disclosure relates to gas flow measurement equipment and, in particular, to equipment, systems, and methods designed to improve the accuracy of gas flow measurement in custody transfer transactions along a gas pipeline. Because of the tremendous volume of gas being transferred between pipeline companies, small measurement errors can have very large financial effects.

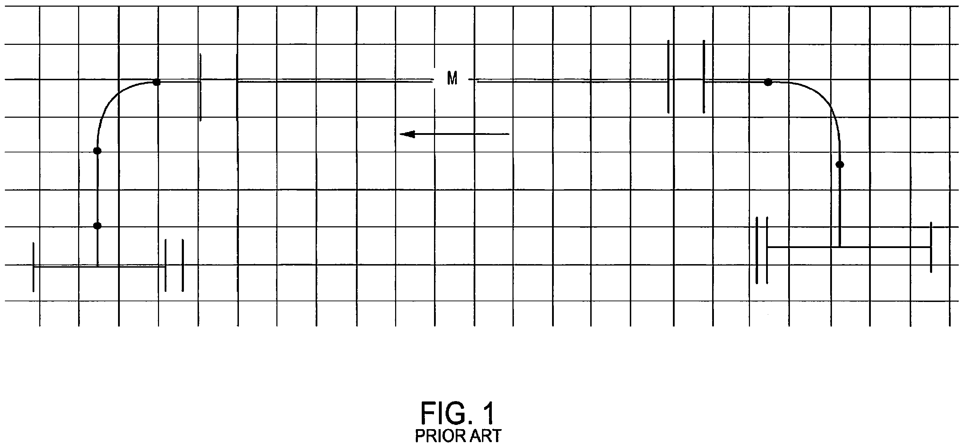

To measure gas flow through a pipeline, ultrasonic gas flow meters are placed along a section of pipe. A front end treatment or elbow diverts the main pipeline flow toward the flow meter and reduces swirl using a flow conditioner placed 10 pipeline diameters ahead of the flow meter. The conditioner provides a bullet-nosed gas flow profile into the meter. A backend treatment or elbow located at least 5 pipeline diameters after the meter brings the now-measured gas flow back in line with the main pipeline (see FIG. 1). The backend elbow, along with a blind flange located opposite the main pipeline, helps attenuate ultrasonic waves generated by downstream equipment such as a control valve and prevents those waves from traveling back to the flow meter and interfering with flow measurement.

The use of elbows at the front and back end of the flow meter section widens the footprint of the section. Therefore, a wide skid must be built to support the section and special permits must be obtained to transport the skid to the job site. A need exists for an ultrasonic attenuation treatment that can eliminate the use of elbows.

WO99/22207 discloses a silencer for use with an ultrasonic flow meter for measuring a stream of fluid in a pipe. The silencer is for reducing the noise in the ultrasonic range of frequencies caused by flow control valves and related equipment such that the wavelengths associated with the silencer are short with respect to the dimensions of the associated equipment. In one embodiment, an attenuation section contains two sets of laterally spaced, vertically oriented, solid wall first and second plates located between an inlet end and an outlet end of the pipe. Each of the plates has a first end connected to an opposing inside wall of the pipe.

JP2012/220428 describes a silencer for ultrasonic flowmeter having a tubular body which is connected to a pipe and in which a gas is passed through, an annular partition wall which is expanded from an inner surface of the tubular body and has a center hole inside, and a central partition wall having an annular hole which is formed identically or similarly to the central hole and formed between the central partition wall and the inner surface of the tubular body being arranged side by side alternately in an axial direction of the tubular body and the central hole and the annular hole are arranged while being displaced so as not to be confronted in the axial direction of the tubular body.

### SUMMARY

The present invention is characterized in that the second plates of each set includes a first end and a second end, neither of each contacting the opposing and respective opposing inside walls of the pipe.

Embodiments of an end treatment for use with an ultrasonic gas flow meter include an attenuation section having a pipe extending in a longitudinal direction and containing a set of alternating, spaced, and vertically oriented first and second plates located between an inlet end and an outlet end of the pipe. Each plate includes a first end connected to an inside wall of the pipe and a second end extending past a longitudinal centerline of the pipe to define a gap between the end of the plate and a respective opposing inside wall of the pipe. As the gas traverses the plates by flowing through the gaps, the ultrasonic waves reflect off the plates, toward other plates or the pipe wall and not back to the ultrasonic gas flow meter.

In some embodiments, the first plates extend from a top inside wall of the pipe and the second plates extend from the bottom inside wall of the pipe. The second plates, when arranged as bottom plates, may include a mouse hole located toward the first end to prevent pooling of condensate.

The inlet and outlet ends may have a first inside diameter D1 and a second inside diameter D2, D2 > D1, with the pipe being at the second inside diameter D2. The gap can be sized to be less than the first inside diameter D1. In some embodiments, the gap is sized to half that of the first inside diameter D1. The second inside diameter D2 may be at least twice that of the first inside diameter D1. The inlet end can be arranged for D1 to D2 flow and the outlet end can be arranged for D2 to D1 flow. The inlet and outlet ends may include an eccentric reducer.

A method of attenuating ultrasonic waves originating from downstream of the ultrasonic gas flow meter is also disclosed. Embodiments of the method include causing a gas flow that exits the ultrasonic gas flow meter to traverse an attenuation section that includes a pipe extending in a longitudinal direction and containing a set of alternating, spaced, and vertically oriented first and second plates located between an inlet end and an outlet end of the pipe, wherein each plale includes a first end connected to an inside wall of the pipe and a second end extending past a longitudinal centerline of the pipe to define a gap between the end of the plate and a respective opposing inside wall of the pipe.

An end treatment of this disclosure, and method of its use with an ultrasonic gas flow meter, may include an attenuation section having a pipe extending in a longitudinal direction, the pipe containing at least two alternating sets of laterally spaced, vertically oriented, solid wall first and second plates located between an inlet end and an outlet end of the pipe; the first plate of each set including a first end connected to an opposing inside wall of the pipe and a second end, the second end of the first plate not contacting a respective opposing inside wall of the pipe to define a gap; the second plate of each set including a. first end and a. second end, the second end extending past a longitudinal centerline of the pipe and not contacting the respective opposing inside wall of the pipe to define another gap. In embodiments, the first end of the second plate may be connected to another opposing inside wall of the pipe. In other embodiments, the first end of the second plate is not connected to the opposing inside wall of the pipe to define yet another gap. The first end of the first plate may not extend past a longitudinal centerline of the pipe. The first and second plates may be oriented at an oblique angle relative to the longitudinal centerline of the pipe. In other embodiments, the first and second plates are oriented perpendicular relative to the longitudinal centerline of the pipe. The inlet and outlet ends may include an eccentric reducer.

### BRIEF DESCRIPTION OF THE DRAWINGS

FIG. 1 is a prior art gas flow meter or measurement section of a gas pipeline.
Figures 2 to 7 show embodiments not part of the claimed invention.

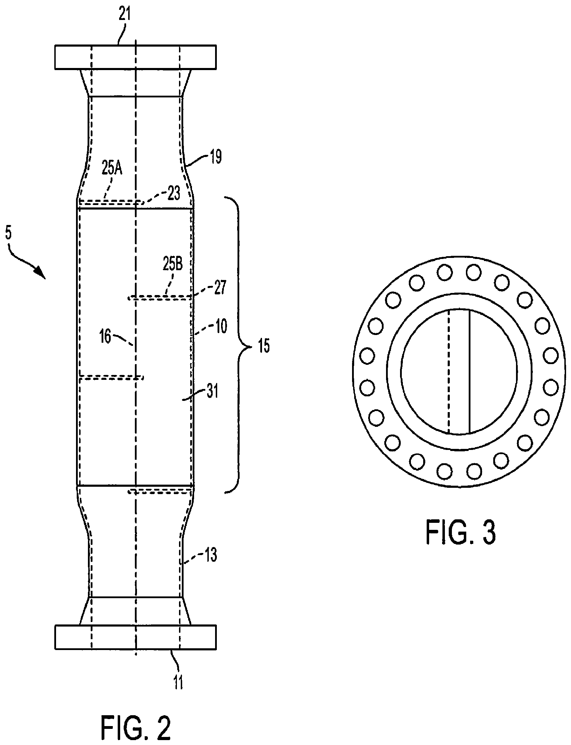

FIG. 2 is top plan view of an embodiment of an inline ultrasonic attenuation end treatment.
FIG. 3 is an end view of the end treatment.

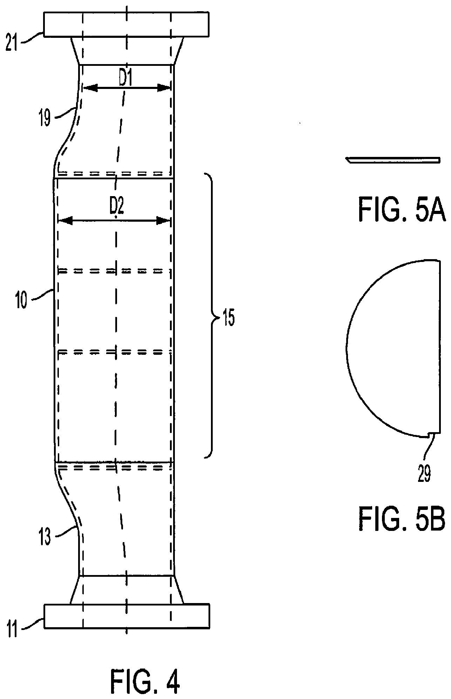

FIG. 4 is a side elevation view of the end treatment.
FIG. 5A is an embodiment of a reflective plate having a 45° bevel on the radial edge of the plate.
FIG. 5B is a front elevation view of a notch or mouse hole located toward a pipe wall end of a reflective plate.

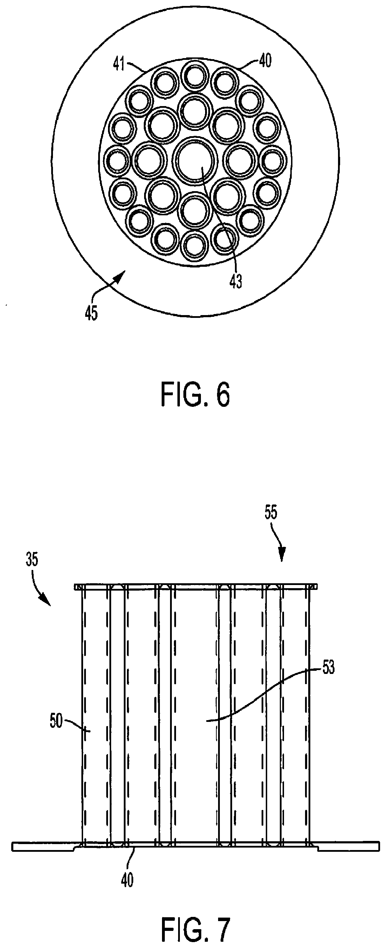

FIG. 6 is front elevation view of an embodiment of an effects isolator that may be used as part of an inline front end treatment in combination with the inline ultrasonic attenuation end treatment.
FIG. 7 is top plan view of the effects isolator.

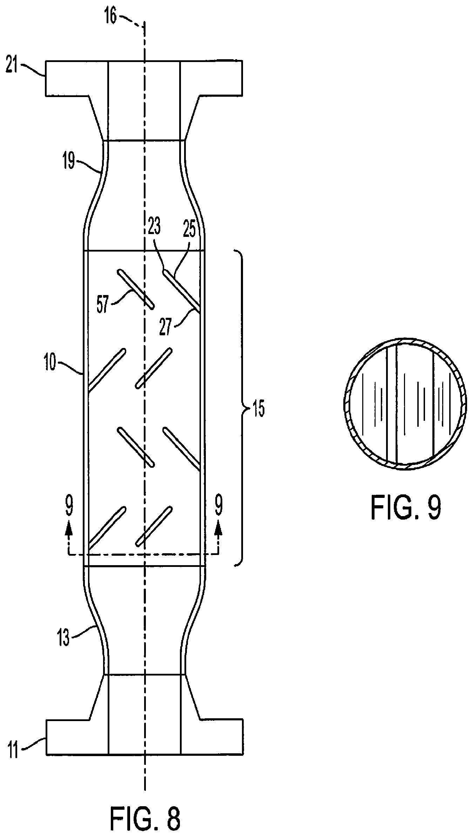

FIG. 8 is top plan cross section view of an effects isolator of this disclosure in accordance with the invention.
FIG. 9 is a view taken along section line 9-9 of FIG. 8.

### Elements and Numbering Used in the Drawings and Detailed Description

- 5: Inline ultrasonic attenuation end treatment
- 10: Pipe section
- 11: Inlet end having a first inside diameter D1
- 13: Reducer located toward 11 (*e.g*. 12" to 16")
- 15: Attenuation section (*e.g*. 16")
- 16: Longitudinal centerline
- 19: Reducer located toward 21 (*e.g*. 16" to 12")
- 21: Outlet, end
- 23: Second (inward) end of 25
- 25: Plate
- 27: First (pipe wall) end of 25
- 29: Mouse hole
- 31: Gap
- 35: Effects isolator
- 40: Flow conditioner
- 41: Perforated plate
- 43: Central aperture
- 45: Aperture array
- 50: Tube bundle
- 53: Central vane
- 53: Vane bundle or array
- 57: Portion of plate 25 crossing centerline 16
- D1: First inside diameter
- D2: Second inside diameter

### DETAILED DESCRIPTION

In embodiments of an inline ultrasonic attenuation end treatment 5, ultrasonic waves are prevented from interfering with an ultrasonic gas flow meter by a series of alternating plates.

Referring first to FIGS. 2 to 5B and 8 to 9, the end treatment 5 includes a pipe section 10 with two different size inside diameters D1, D2 located between and inlet end 11 and outlet end 21, with D2 > D1. The ends 11, 21, which may be arranged for connection to a respective opposing end of a main pipeline, have the first inside diameter D1. Located between the two ends 11, 21 are eccentric reducers 13, 19 and an attenuation section 15. (Concentric reducers may be used but eccentric reducers can prevent puddling.) Eccentric reducers 13, 19 also have the second inside diameter D2. Reducer 13 is arranged for D1 to D2 flow. Reducer 19 is arranged for D2 to D1 flow.

Attenuation section 15 also has second inside diameter D2 extending along its entire length and includes a set of alternating, horizontally spaced, and vertically oriented plates 25A, 25B. In embodiments, plates 25A are top plates and plates 25B are bottom plates. The second (inward) end 23 of the plate 25 can be beveled and the first (pipe wall) end 27 may include a mouse hole 29 for drainage.

The attenuation section 15 may be sized so that an effective inside diameter provided by a set of two alternating plates 25A, 25B is the same as that of the first inside diameter D1. Each plate 25 can extend past the section's longitudinal centerline 16 to eliminate any straight line path back to the flow meter. Therefore, to reach the ultrasonic gas flow meter and interfere with its measurement, any ultrasonic wave being reflected back toward the flow meter must traverse the set of alternating reflective plates 25. However, each plate 25 causes the wave to reflect back to an adjacent plate 25 or the pipe wall

In embodiments, plates 25A, 25B may be laterally spaced apart as a set of plates so that at least a portion 57 of one plate 25A or B intersects the longitudinal centerline 16 of the section 15 whereas the portion 57 of the other plate 25B or A of the pair does not. Another set of plates 25 A, 25B may be arranged in an alternating fashion to that of the first. The plates 25 may be vertically oriented, solid wall plates. The first plate 25A of each set may include a first end 27 connected to an opposing inside wall of the pipe and a second end 23 not contacting a respective opposing inside wall of the pipe to define a gap 31, The first end 27 of the first plate 25A may not extend past a longitudinal centerline 16 of the pipe. The second plate 25B of each set may include a first end 27 not contacting another opposing inside wall of the pipe to define another gap 31 and a second end 23 extending past a longitudinal centerline 16 of the pipe but not contacting the respective opposing inside wall of the pipe (to define yet another gap 31). The gaps 31 provide flow channels for the gas and the plates 25 prevent ultrasonic waves from propagating back to the flow meter. In some embodiments, the first end 27 of the second plate 25B may be connected to another opposing inside wall of the pipe. The first and second plates 25A, 25B may be oriented at an oblique angle relative to the longitudinal centerline 16 of the pipe. In other embodiments, the first and second plates 25A, 25B are oriented perpendicular relative to the longitudinal centerline 16 of the pipe. The inlet and outlet ends 11, 21 may include an eccentric reducer 13, 19.

The inline ultrasonic attenuation end treatment 5 can be used in combination with a front end treatment including an effects isolator. The effects isolator can eliminate the need for end treatment upstream of the ultrasonic flow meter and can be used in combination with the in-line ultrasonic attenuation treatment end.

Referring now to FIGS. 6 and 7, embodiments of an effects isolator 35 may include a flow conditioner 40 or a flow conditioner 40 connected to or spaced from a tube bundle 50. The flow conditioner 40 may be the same or similar to that disclosed in US 5,341,848 and include a perforated plate 41 having a central aperture 43 with one or more apertures 45 arrayed about it. The flow conditioner 40 can help develop the desired bullet-nosed flow profile for flow into the ultrasonic gas flow meter. Similar to the attenuation end treatment, the front end treatment may be an in-line treatment end

The tube bundle 50 may include a longitudinally extending central vane 53 corresponding to the central aperture 43 of the flow conditioner 40 and a bundle or array of longitudinally extending vanes 55 arranged about the central vane 53. The size and number of vanes 43 correspond to a respective size and number of apertures 45 in the flow conditioner 10. Preferably, the vanes 53, 55 are about the same diameter as the flow conditioner's 40 perforations.

Although embodiments of an inline ultrasonic attenuation end treatment have been described with reference to particular means, materials and embodiments, the end treatment is not intended to be limited to those particulars. Rather, the description extends to all functionally equivalent structures, methods, and uses, such as are within the scope of the following claims.

## Claims

1. An end treatment (5) for use with an ultrasonic gas flow meter, the end treatment (5) comprising:
an attenuation section (15) including a pipe (10) extending in a longitudinal direction, the pipe (10) containing at least two alternating sets of laterally spaced, vertically oriented, solid wall first and second plates (25A/25B) located between an inlet end (11) and an outlet end (21) of the pipe (10);
the first (25A) plate of each set including a first end (27) connected to an opposing inside wall of a wall of the pipe and a second end (23) not contacting a respective opposing inside wall of the wall of the pipe to define a gap (31);
the second (25B) plate of each set including a first end (27) and a second end (23);
the end treatment (5) being **characterized in that** neither of the first end (27) and the second end (23) of the second (25B) plate contact the opposing and respective opposing inside walls of the wall of the pipe to define another gap (31); and
the inlet and outlet ends including a first inside diameter D1 and the pipe including a second inside diameter D2, D2>D1.

2. The end treatment (5) of claim 1, further comprising a flow conditioner (40) located upstream of the inlet end (11).

3. The end treatment (5) of claim 1 further comprising the inlet (11) and outlet ends (21) including an eccentric reducer (13/19).

4. The end treatment (5) of claim 1 wherein at least one of the first and second plates (25A/25B) is semi-circular shaped.

5. A method of attenuating ultrasonic waves originating from a downstream source, the method comprising:
causing a gas flow exiting an ultrasonic gas flow meter to traverse an ultrasonic wave attenuation section (15) including:
a pipe (10) extending in a longitudinal direction, the pipe (10) containing at least two alternating sets of laterally spaced, vertically oriented, solid wall first and second plates (25A/25B) located between an inlet end (11) and an outlet end (21) of the pipe (10);
the first (25A) and second (25B) plates of each set being spaced apart parallel to one another and the second plate being only partially located on the one side of a longitudinal centerline of the pipe the first plate of each set including a first end (27) connected to an opposing inside wall of a wall of the pipe (10) and a second end (23) not contacting a respective opposing inside wall of the wall of the pipe (10) to define a gap (31);
the second plate (25B) of each set (25A/25B) including a first end (27) and a second end (23);
the method being **characterized in that** neither of the first end (27) and the second end (23) of the second (25B) plate is arranged to contact the opposing and respective opposing inside walls of the wall of the pipe to define another gap (31), wherein the first and second plates of each set being oriented at an oblique angle relative to the longitudinal centerline of the pipe, the longitudinal centerline of the pipe intersecting the second plate but not the first plate, the first plate being located entirely on one side of the longitudinal centerline of the pipe.

6. The method of claim 5 wherein the inlet (11) and outlet ends (21) include a first inside diameter D1 and the pipe (10) includes a second inside diameter D2, D2 > D1.

7. The method of claim 5, further comprising passing the gas flow through a flow condition (40) prior to the ultrasonic gas flow meter.

8. The method of claim 5, wherein at least one of the inlet (11) and outlet ends (21) include an eccentric reducer (13/19).

9. The method of claim 5 wherein at least one of the first and second plates (25A/25B) is semi-circular shaped.

## Patentansprüche

1. Endbehandlung (5) zur Verwendung mit einem Ultraschall-Gasdurchflussmesser, wobei die Endbehandlung (5) Folgendes umfasst:
einen Dämpfungsabschnitt (15), der ein Rohr (10) aufweist, das sich in einer Längsrichtung erstreckt, wobei das Rohr (10) mindestens zwei abwechselnde Sätze von seitlich beabstandeten, vertikal ausgerichteten ersten und zweiten Platten (25A/25B) mit einer massiven Wand enthält, die sich zwischen einem Einlassende (11) und einem Auslassende (21) des Rohrs (10) befinden;
wobei die erste (25A) Platte jedes Satzes ein erstes Ende (27), das mit einer gegenüberliegenden Innenwand einer Wand des Rohrs verbunden ist, und ein zweites Ende (23) aufweist, das eine entsprechende gegenüberliegende Innenwand der Wand des Rohrs nicht berührt, um einen Spalt (31) zu bilden;
wobei die zweite (25B) Platte jedes Satzes ein erstes Ende (27) und ein zweites Ende (23) aufweist;
wobei die Endbehandlung (5) **dadurch gekennzeichnet ist, dass** weder das erste Ende (27) noch das zweite Ende (23) der zweiten (25B) Platte die gegenüberliegenden und jeweils gegenüberliegenden Innenwände der Wand des Rohrs berühren, um einen weiteren Spalt (31) zu definieren; und
wobei das Einlass- und das Auslassende einen ersten Innendurchmesser D1 aufweisen und das Rohr einen zweiten Innendurchmesser D2 aufweist, wobei D2>D1.

2. Endbehandlung (5) nach Anspruch 1, ferner umfassend einen Strömungskonditionierer (40), der sich stromaufwärts des Einlassendes (11) befindet.

3. Endbehandlung (5) nach Anspruch 1, ferner umfassend, dass das Einlass- (11) und das Auslassende (21) ein exzentrisches Reduzierstück (13/19) aufweisen.

4. Endbehandlung (5) nach Anspruch 1, wobei mindestens eine der ersten und der zweiten Platte (25A/25B) halbkreisförmig ist.

5. Verfahren zum Dämpfen von Ultraschallwellen, die von einer stromabwärts gelegenen Quelle ausgehen, wobei das Verfahren Folgendes umfasst:
Bewirken, dass eine aus einem Ultraschall-Gasdurchflussmesser austretende Gasströmung einen Ultraschallwellen-Dämpfungsabschnitt (15) durchläuft, der Folgendes aufweist:
ein Rohr (10), das sich in einer Längsrichtung erstreckt, wobei das Rohr (10) mindestens zwei abwechselnde Sätze von seitlich beabstandeten, vertikal ausgerichteten ersten und zweiten Platten (25A/25B) mit einer massiven Wand enthält, die sich zwischen einem Einlassende (11) und einem Auslassende (21) des Rohrs (10) befinden;
wobei die erste (25A) und die zweite (25B) Platte jedes Satzes parallel zueinander beabstandet sind und die zweite Platte sich nur teilweise auf der einen Seite einer Längsmittellinie des Rohrs befindet
wobei die erste Platte jedes Satzes ein erstes Ende (27), das mit einer gegenüberliegenden Innenwand einer Wand des Rohrs (10) verbunden ist, und ein zweites Ende (23) aufweist, das eine entsprechende gegenüberliegende Innenwand der Wand des Rohrs (10) nicht berührt, um einen Spalt (31) zu definieren;
wobei die zweite Platte (25B) jedes Satzes (25A/25B) ein erstes Ende (27) und ein zweites Ende (23) aufweist;
wobei das Verfahren **dadurch gekennzeichnet ist, dass** weder das erste Ende (27) noch das zweite Ende (23) der zweiten (25B) Platte so angeordnet ist, dass es die gegenüberliegenden und jeweils gegenüberliegenden Innenwände der Wand des Rohrs berührt, um einen weiteren Spalt (31) zu definieren, wobei die erste und die zweite Platte jedes Satzes in einem schrägen Winkel relativ zur Längsmittellinie des Rohrs ausgerichtet sind, wobei die Längsmittellinie des Rohrs die zweite Platte, nicht aber die erste Platte schneidet, wobei sich die erste Platte vollständig auf einer Seite der Längsmittellinie des Rohrs befindet.

6. Verfahren nach Anspruch 5, wobei das Einlass- (11) und das Auslassende (21) einen ersten Innendurchmesser D1 aufweisen und das Rohr (10) einen zweiten Innendurchmesser D2 aufweist, wobei D2>D1.

7. Verfahren nach Anspruch 5, ferner umfassend das Leiten der Gasströmung durch einen Strömungskonditionierer (40) vor dem Ultraschall-Gasdurchflussmesser.

8. Verfahren nach Anspruch 5, wobei mindestens eines des Einlass- (11) und des Auslassendes (21) ein exzentrisches Reduzierstück (13/19) aufweist.

9. Verfahren nach Anspruch 5, wobei mindestens eine der ersten und der zweiten Platte (25A/25B) halbkreisförmig ist.

## Revendications

1. Traitement d'extrémité (5) à utiliser avec un débitmètre de gaz à ultrasons, le traitement d'extrémité (5) comprenant :
une section d'atténuation (15) comprenant un tuyau (10) s'étendant dans une direction longitudinale, le tuyau (10) contenant au moins deux ensembles alternés de première et deuxième plaques (25A/25B) à paroi pleine, latéralement espacées et orientées verticalement, situées entre une extrémité d'entrée (11) et une extrémité de sortie (21) du tuyau (10) ;
la première plaque (25A) de chaque ensemble comprenant une première extrémité (27) reliée à une paroi intérieure opposée d'une paroi du tuyau et une deuxième extrémité (23) n'entrant pas en contact avec une paroi intérieure opposée respective de la paroi du tuyau pour définir un espace (31) ;
la deuxième plaque (25B) de chaque ensemble comprenant une première extrémité (27) et une deuxième extrémité (23) ;
le traitement d'extrémité (5) étant **caractérisé en ce que** ni la première extrémité (27) ni la deuxième extrémité (23) de la deuxième plaque (25B) n'entrent en contact avec les parois intérieures opposées et respectives de la paroi du tuyau pour définir un autre espace (31) ; et
les extrémités d'entrée et de sortie comprenant un premier diamètre intérieur D1 et le tuyau a un deuxième diamètre intérieur D2, D2>D1.

2. Traitement d'extrémité (5) selon la revendication 1, comprenant en outre un conditionneur de débit (40) situé en amont de l'extrémité d'entrée (11).

3. Traitement d'extrémité (5) selon la revendication 1, comprenant les extrémités d'entrée (11) et de sortie (21) avec un réducteur excentrique (13/19).

4. Traitement d'extrémité (5) selon la revendication 1, dans lequel au moins une des première et deuxième plaques (25A/25B) est de forme semi-circulaire.

5. Procédé d'atténuation d'ondes ultrasonores provenant d'une source en aval, ledit procédé visant à :
faire en sorte qu'un flux de gaz sortant d'un débitmètre de gaz à ultrasons traverse une section d'atténuation des ondes ultrasonores (15) comprenant :
un tuyau (10) s'étendant dans une direction longitudinale, le tuyau (10) contenant au moins deux ensembles alternés de première et deuxième plaques (25A/25B) à paroi solide, espacées latéralement et orientées verticalement, situées entre une extrémité d'entrée (11) et une extrémité de sortie (21) du tuyau (10) ;
les première (25A) et deuxième (25B) plaques de chaque ensemble étant espacées parallèlement l'une à l'autre et la deuxième plaque n'étant que partiellement située d'un côté de l'axe central longitudinal du tuyau,
la première plaque de chaque ensemble comprenant une première extrémité (27) reliée à une paroi intérieure opposée d'une paroi du tuyau (10) et une deuxième extrémité (23) n'entrant pas en contact avec une paroi intérieure opposée respective de la paroi du tuyau (10) pour définir un espace (31) ;
la deuxième plaque (25B) de chaque ensemble (25A/25B) comprenant une première extrémité (27) et une deuxième extrémité (23) ;
le procédé étant **caractérisé en ce que** ni la première extrémité (27) ni la deuxième extrémité (23) de la deuxième plaque (25B) n'est agencée pour entrer en contact avec les parois intérieures opposées et respectives de la paroi du tuyau pour définir un autre espace (31), dans lequel la première et la deuxième plaque de chaque ensemble sont orientées à un angle oblique par rapport à l'axe central longitudinal du tuyau, l'axe central longitudinal du tuyau coupe la deuxième plaque mais pas la première plaque, la première plaque étant située entièrement d'un côté de l'axe central longitudinal du tuyau.

6. Procédé selon la revendication 5, dans lequel les extrémités d'entrée (11) et de sortie (21) comprennent un premier diamètre intérieur D1 et le tuyau (10) comprend un deuxième diamètre intérieur D2, D2 > D1.

7. Procédé selon la revendication 5, comprenant en outre le passage du flux de gaz à travers un conditionneur de débit (40) avant le débitmètre de gaz à ultrasons.

8. Procédé selon la revendication 5, dans lequel au moins l'une des extrémités d'entrée (11) et de sortie (21) comprend un réducteur excentrique (13/19).

9. Procédé selon la revendication 5, dans lequel au moins l'une des première et deuxième plaques (25A/25B) est de forme semi-circulaire.
